# EUROPÄISCHE PATENTSCHRIFT

(11) **EP 0 837 152 B1**
(45) Veröffentlichungstag und Bekanntmachung des Hinweises auf die Patenterteilung: **07.02.2001**
(21) Anmeldenummer: 97117899.1
(22) Anmeldetag: 16.10.1997
(51) Int. Cl.: C23C 4/04, C23C 4/16

(54) **Verfahren zum Beschichten eines aus einer Aluminium-Legierung bestehenden Bauteils einer Brennkraftmaschine mit Silicium**
Process for coating an aluminium alloy device of an internal combustion engine with silicon
Procédé de revêtement d'un substrat en alliage d'aluminium d'un moteur à combustion interne avec du silicium

(30) Priorität: 18.10.1996 DE 19643029
(43) Veröffentlichungstag der Anmeldung: 22.04.1998
(73) Patentinhaber: Bayerische Motoren Werke Aktiengesellschaft, 80788 München (DE)
(72) Erfinder: Mielsch, Götz, 80992 München (DE); Sauer, Dieter, 85309 Pörnbach (DE); Stothard, Nigel, Dr., 81927 München (DE)

(56) Entgegenhaltungen:
- WO-A-89/10434
- DE-A- 2 333 198
- DE-A- 19 532 252
- GB-A- 1 039 633
- PATENT ABSTRACTS OF JAPAN vol. 006, no. 054 (C-097), 9.April 1982 & JP 56 166368 A (TOYOTA MOTOR CORP), 21.Dezember 1981,
- PATENT ABSTRACTS OF JAPAN vol. 005, no. 178 (C-078), 14.November 1981 & JP 56 102546 A (TOYOTA MOTOR CORP), 17.August 1981,
- PATENT ABSTRACTS OF JAPAN vol. 011, no. 176 (C-426), 5.Juni 1987 & JP 62 001851 A (HITACHI LTD), 7.Januar 1987,
- PATENT ABSTRACTS OF JAPAN vol. 009, no. 088 (C-276), 17.April 1985 & JP 59 219468 A (TEIKOKU PISTON RING KK), 10.Dezember 1984,
- PATENT ABSTRACTS OF JAPAN vol. 013, no. 227 (C-600), 25.Mai 1989 & JP 01 039360 A (MITSUBISHI HEAVY IND LTD), 9.Februar 1989,

## Beschreibung

Die Erfindung betrifft ein Verfahren zum Beschichten eines insbesondere aus einer Aluminium-Legierung bestehenden Bauteils einer Brennkraftmaschine, insbesondere eines Brennkraftmaschinen-Zylinders, mit Silicium durch einen Hochenergiestrahl. Zum technischen Umfeld wird beispielshalber auf die DE 39 22 378 A1, daneben auf GB-A-1,039,633, sowie auf JP-A-56-166368 und JP-A-56-102546 verwiesen.

Aluminium-Bauteile von Brennkraftmaschinen, insbesondere die Zylinder-Laufbahnen von Brennkraftmaschinen-Kurbelgehäusen aus einer Aluminium-Legierung sind in Abhängigkeit von der Verschleißqualität der Legierung mit einer Verschleißschutzschicht zu versehen, welche üblicherweise als Legierungsbestandteil Silicium enthält. Eine einfache galvanische Beschichtung zeigt teilweise mangelnde chemische Resistenz, während beim üblichen Plasmaspritzen verfahrenstechnische Mängel bezüglich der Haftung auftreten können. Diese bekannten Technologien sind auch in der GB-A-1,039,633 sowie in den Patent Abstracts of Japan zu JP-A-56-166368 und JP-A-56-102546 erwähnt. Bei der erstgenannten JP-Schrift wird ein hypereutektische Si-AI-Material durch Flammspritzen aufgebracht und das Substrat (bzw. das zu beschichtende Bauteil) aufgeheizt, wobei sich proeutektische Si-Körner ausscheiden. Die zweitgenannte JP-Schrift erwähnt verschiedene Auftragsmethoden zur Beschichtung bspw. einer Schaltgabel eines Kraftfahrzeug-Schaltgetriebes. Bekannt ist ferner das Laserauftragsschweißen, bei welchem jedoch durch starke Einlegierung in das Grundmetall oft metallurgische Probleme im Gefüge der Legierungszone auftreten.

Aufgabe der Erfindung ist es, ein im Hinblick auf die erzielbaren Ergebnisse optimiertes Beschichtungsverfahren nach dem Oberbegriff des Anspruchs 1 aufzuzeigen.

Die Lösung dieser Aufgabe ist dadurch gekennzeichnet, daß ein Aluminium-Silicium-Pulver mittels einer geeigneten, ähnlich einer beim bekannten Plasmaspritzen Verwendung findenden Pulverfördereinrichtung in Zusammenwirken mit dem als Laserstrahl ausgebildeten Hochenergiestrahl von der festen in die schmelzflüssige Phase umgewandelt und auf die Bauteil-Oberfläche in Form feiner Tröpfchen als Schichtmaterial aufgetragen wird, und wobei eine Möglichkeit zur Kühlung der Bauteil-Oberfläche vorgesehen ist, so daß beim folgenden Erstarrungsprozeß feinstdisperses Silicium freigesetzt wird. Vorteilhafte Weiterbildungen sind Inhalt der Unteransprüche.

Wie dem Fachmann bekannt ist - dies geht auch aus dem üblichen und bekannten Schmelzdiagramm Al/Si hervor -, ist die Löslichkeit von Silicium in Aluminium im flüssigen Zustand erheblich höher als im festen Zustand. Theoretisch lassen sich Aluminium-Silicium-Legierungen mit einem Siliciumanteil von bis zu 99 % herstellen, jedoch steigt hierbei der Schmelzpunkt der Legierung stark an. Aus diesem Grunde werden Kurbelgehäuse von Brennkraftmaschinen üblicherweise mit einem Silicium-Anteil von 17 % abgegossen. Hingegen kann ein Aluminium-Silicium-Pulver durchaus mit einem Silicium-Anteil von bis zu 99 % hergestellt werden. Je höher der Silicium-Anteil in einer Oberflächenschicht eines mechanisch beanspruchten Brennkraftmaschinen-Bauteiles ist, desto höher ist selbstverständlich die Verschleißfestigkeit dieses Bauteiles.

Ein Aluminium-Silicium-Pulver mit relativ hohem Silicium-Anteil könnte nun beispielsweise mittels Plasmaspritzen auf die zu beschichtende Oberfläche aufgetragen und zusätzlich mittels Laser umgeschmolzen werden, so wie das in der eingangs bereits genannten GB-A-1,039,633 beschrieben ist. Alternativ dazu kann das Pulver mit einem Binder zu einer streichfähigen Paste verarbeitet, aufgetragen, getrocknet und dann mittels Laser eingeschmolzen werden, wie dies in der oben genannten DE 39 22 378 A1 beschrieben ist. Bei diesen beiden soeben genannten Verfahren wird jedoch die aufgebrachte Schicht nachträglich mit dem zu beschichtenden Oberflächenmaterial legiert. Aufgrund dieser homogenen Legierung der Beschichtung mit dem Grundwerkstoff wird zwar die Haftung verbessert, jedoch wird die auf diese Weise erreichbare Korngröße der Silicium-Partikel durch die maximale Abkühlgeschwindigkeit bestimmt, welche wiederum abhängig ist von der Wärmeleitfähigkeit des zu beschichtenden Bauteiles. Bei diesen bekannten Verfahren sind die sich ergebenden Abschreckgeschwindigkeiten gering, da der Laserstrahl tief in den Grundwerkstoff des Bauteiles eindringt.

Vollkommen verschieden hiervon arbeitet das Beschichtungsverfahren nach der vorliegenden Erfindung. Hier erfolgt keine eigentliche Einlegierung der Oberflächenschicht in das Bauteil, sondern es wird eine Phasenumwandlung des Beschichtungsmateriales zur Erzeugung feinstdisperser Ausscheidungen dergestalt genutzt, daß durch den Laserstrahl das Aluminium-Silicium-Pulver auf dem Weg zur zu beschichtenden Oberfläche schmelzflüssig wird - hier liegt das Silicium vollständig im Aluminium aufgelöst vor - und daran anschließend aus den feinen Tröpfchen auf dieser Oberfläche erstarrt. Der beim Erstarren wieder erfolgende Phasenübergang in den festen Zustand setzt feinstdisperses Silicium, sog. Primärsilicium frei. Dabei wird dieser Erstarrungsprozeß durch eine geeignete vorgesehene Möglichkeit zur Kühlung der Bauteiloberfläche begünstigt, worauf an späterer Stelle noch näher eingegangen wird.

In anderen Worten ausgedrückt wird somit vorgeschlagen, mittels Laser ein durch Verdüsen hergestelltes hochsiliciumhaltes Aluminium-Pulver auf eine untereutektoide Aluminium-Legierung, nämlich das besagte Bauteil, aufzutragen. Wenn nun dieses Pulver noch vor dem Auftreffen auf das Bauteil in die schmelzflüssige Phase übergeht, bei welcher Silicium vollständig gelöst ist, so läßt sich über einen weiten Bereich nicht nur die Menge, sondern auch die Korngröße des nach dem Erstarren vorliegenden sog. Primärsiliciums steuern. Durch die hohen Abkühlgeschwindigkeiten des schmelzflüssigen Aluminium-Silicium-Pulvers auf der Bauteiloberfläche lassen sich nämlich feinstdisperse Aluminium-Primärsilicium-Gefüge herstellen. Je nach Abkühlgeschwindigkeit sind hierbei Silicium-Kristalle in der Größenordnung von 1 bis 5 pm erzeugbar. Diese gegenüber dem bekannten Stand der Technik schnelle Abkühlung ergibt sich daraus, daß die Energie des Laserstrahls nicht direkt auf das zu beschichtende Bauteil einwirkt, sondern lediglich dazu genutzt wird, das Aluminium-Silicium-Pulver in die schmelzflüssige Phase, in welcher Silicium vollständig gelöst vorliegen kann, umzuwandeln.

Selbstverständlich ist eine geeignete Pulverfördereinrichtung erforderlich, mit der das Aluminium-Silicium-Pulver zugeführt und dem Laserstrahl ausgesetzt wird. Eine derartige Einrichtung, die in ähnlicher Weise vom Plasmaspritzen her bekannt ist, kann eine unterschiedlich positionierbarte Beschichtungslanze aufweisen, über die der Hochenergiestrahl/Laserstrahl fokussiert sowie ggf. umgelenkt auf die Bauteil-Oberfläche projiziert wird. Dieser (bevorzugt) Laserstrahl trifft jedoch nicht mit seiner vollständigen Energie auf die Bauteil-Oberfläche auf, sondern ihm wird noch vor dem Auftreffen ein Strahl von Aluminium-Silicium-Pulver beigemengt, wodurch dieses dem Hochenergiestrahl/Laserstrahl Energie entzieht und noch beabstandet von der Bauteil-Oberfläche aufschmilzt. Anschließend lagert sich dieses in schmelzflüssiger Form/Phase vorliegende Aluminium-Silicium-Pulver in Tröpfchenform auf der Bauteil-Oberfläche ab. Dabei kann eine mit einer Pulverfördereinrichtung für das Aluminium-Silicium-Pulver verbundene Pulver-Austrittsdüse an der Beschichtungslanze befestigt sein.

Was nun die beschichtete Bauteil-Oberfläche betrifft, so ist es vorteilhafterweise bei Vorliegen derart feiner Gefüge, wie sie mit Hilfe des beschriebenen Beschichtungsverfahrens erzeugt werden können, d. h. bei einer Kristallgröße des sich ausscheidenden Primär-Siliciums in der Größenordnung von 5 um, nicht mehr erforderlich, die Beschichtung zur Freilegung des Siliciums chemisch zu ätzen. Ist eine erfindungsgemäße Schicht auf die Zylinder eines Brennkraftmaschinen-Kurbelgehäuses aufgebracht, so ist auch eine weitere Beschichtung der Brennkraftmaschinen-Kolben sowie eine Panzerung der Kolbenringe nicht mehr erforderlich. In diesem Zusammenhang sei darauf hingewiesen, daß dann auch eine Schädigung der Beschichtung durch Rißbildung praktisch ausgeschlossen ist, da die verwendeten Werkstoffe, nämlich derjenige des zu beschichtenden Bauteiles sowie der Beschichtungswerkstoff vollständig kompatibel sind und annähernd gleiche Wärmeausdehnung aufweisen. Eine Rißbildung aufgrund unterschiedlicher Wärmeausdehnung bei Temperaturwechsel ist daher mit Sicherheit ausgeschlossen. Ferner ist die Haftung der Schicht auf der Bauteiloberfläche legierungsbedingt ausgezeichnet und erhöht gleichzeitig die Bauteilsteifigkeit. Vorteilhafterweise kann für das zu beschichtende Bauteil, insbesondere für das die Zylinder bildende Brennkraftmaschinen-Kurbelgehäuse eine billige Aluminium-Basislegierung zum Einsatz kommen.

Wie bereits erwähnt, stellen sich die vorteilhaften Effekte dadurch ein, daß die schmelzflüssig aufgetragene Oberflächen-Schutzschicht aus dem Aluminium-Silicium-Pulver mit einer relativ hohen Abkühlgeschwindigkeit erstarrt. Beim Beschichten eines Brennkraftmaschinen-Kurbelgehäuses können dabei die in diesem vorgesehenen Kühlwasser-Kanäle zur schnelleren Abkühlung und somit zum noch schnelleren Erstarren des schmelzflüssig aufgetragenen Aluminium-Silicium-Pulvers genutzt werden. Dies ist insofern von besonderem Vorteil, als auch im Hinblick auf den späteren Betrieb der Brennkraftmaschine die maximale Kühlung im oberen Totpunkt der Zylinderlaufbahn erwünscht ist und dementsprechend dort die Kühlkanäle bestwirkend angeordnet sind. An der gleichen Stelle, nämlich ebenfalls im Bereich des oberen Totpunktes der Zylinderlaufbahn ist nun aber auch die bestmögliche Beschichtung erwünscht, welche durch - ggf. sogar zusätzliche -Kühlung während des Beschichtungsprozesses erzeugt werden kann. Demzufolge wirken sich auch hier die Kühlmittelkanäle bzw. Kühlwasser-Kanäle des Kurbelgehäuses vorteilhaft aus. Dabei kann die Wärme vom Bauteil einfach an die in den Kühlwasser-Kanälen befindliche Luft abgegeben werden, es ist jedoch auch möglich, die Kühlwasser-Kanäle des Brennkraftmaschinen-Kurbelgehäuses mit einer Kühlflüssigkeit zu durchströmen, wenn dieses Kurbelgehäuse nach dem erfindungsgemäßen Verfahren beschichtet werden soll. Bei extremer Kühlung der Bauteil-Oberfläche, beispielsweise mittels flüssigem Stickstoff, der im genannten Anwendungsfall ebenfalls durch die Kühlwasser-Kanäle geleitet werden kann, kann sogar eine Schicht aus amorphem Aluminium-Silicium-Glas gebildet werden. Vorteilhafterweise ist dieses Aluminium-Silicium-Glas zusätzlich chemisch hoch resistent, beispielsweise gegen saure Verbrennungsprodukte, wie schwefelige Säure. Insgesamt kann somit durch Kühlung der Bauteil-Oberfläche die Art der Gefügebildung gesteuert werden.

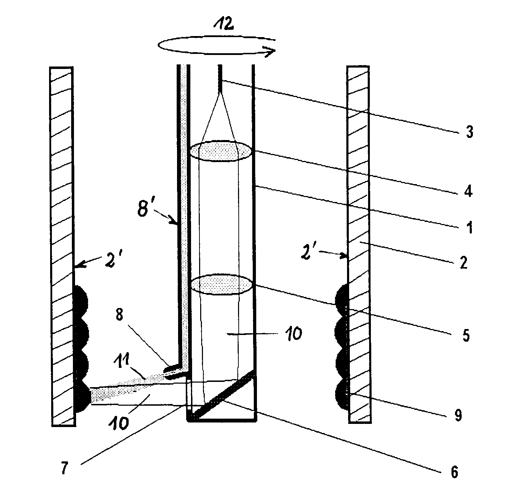

Eine bevorzugte Anordnung, die zur Durchführung des erfindungsgemäßen Beschichtungsverfahrens Anwendung finden kann, ist in der beigefügten Figur lediglich prinzipiell dargestellt und wird im folgenden kurz beschrieben.

Mit der Bezugsziffer 1 ist eine unterschiedlich positionierbare Beschichtungslanze bezeichnet, die bspw. mittels eines Roboters in einen auf nicht dargestellte Weise temperierbaren, insbesondere kühlbaren Brennkraftmaschinen-Zylinder eingeführt wird. Bei diesem Brennkraftmaschinen-Zylinder handelt es sich um das Bauteil 2, dessen ( in diesem Anwendungsfall innere ) Oberfläche 2' nach dem erfindungsgemäßen Verfahren beschichtet werden soll.

An der Beschichtunslanze 1 ist eine Anordnung zur Bereitstellung von letzlich das Schichtmaterial 9 auf der Bauteil-Oberfläche 2' bildendem Aluminium-Silicium-Pulver vorgesehen. Diese besteht aus einer Pulver-Austrittsdüse 8, die über eine entlang der Beschichtungslanze 1 verlaufende und an dieser befestigte Zufuhrleitung 8' mit einer nicht gezeigten Pulverfördereinrichtung verbunden ist. Diese Pulverförderung kann gleichartig denjenigen vom Plasmaspritzen her bekannten sein, wobei jedoch beim hier praktizierten Beschichten mittels eines Laserstrahles 10 keine derart extreme Beschleunigung des Pulvers wie bei einem expandierenden Plasmabogen stattfindet.

Was nun die Bereitstellung des Laserstrahles 10 betrifft, so wird mittels eines Lichtleiters 3 die Laserleistung eines Nd-YAG Lasers ( vorzugsweise mit einer Leistung in der Größenordnung von 3 kW ) in die Beschichtungslanze 1 eingespeist. Über eine geignete Strahlaufweitung in Form einer Kollimatorlinse 4 sowie einer Fokussierlinse 5 wird diese Laserleistung als Laserstrahl 10 über einen Umlenkspiegel 6 durch ein Austrittsfenster 7 aus der Beschichtungslanze 1 auf die Bauteil-Oberfläche 2' projiziert und dabei derart fokusiert, daß die Fläche des Brennfleckes auf der zu beschichtenden Oberfläche 2' ca. 5 - 15 mm² beträgt.

Die Pulverzuführung in den Laserstrahl 10 bzw. auf die Bauteil-Oberfläche 2' erfolgt außerhalb der Beschichtungslanze 1, und zwar über die bereits erwähnte Austrittsdüse 8. Diese ist so angeordnet, daß der über die Zufuhrleitung 8' herangeführte und aus der Austrittsdüse 8 austretende Pulverstrahl 11 in den aus dem Austrittsfenster 7 austretenden Laserstrahl 10 gelangt und in diesem vor einem Auftreffen auf der Bauteil-Oberfläche 2' solange verweilt, daß dieses Pulver durch die Energie des Laserstrahles 10 vollständig von der festen in die schmelzflüssige Phase überführt wird. Dies ist im übrigen möglich, weil hier beim Beschichten mittels des Laserstrahles 10 die vom Plasmapritzen her bekannten extrem hohen Fördergeschwindigkeiten und -beschleunigungen des Pulvers bzw. Pulverstrahles 11 nicht vorliegen.

Dem Laserstrahl 10 wird durch das Aufschmelzen des Pulvers bzw Pulverstrahles 11 außerhalb der Beschichtungslanze 1 noch beabstandet von der Bauteil-Oberfläche 2' Energie entzogen, bevor dieser Laserstrahl 10, ebenso wie der aufgeschmolzene Pulverstrahl 11 auf dem Bauteil 2 auftrifft. Aufgrund dieses Energie-Entzugs wird der Wärmeeintrag durch den Laserstrahl 10 in das Material des zu beschichtenden Bauteiles 2 soweit reduziert, daß auf diesem zwar noch eine metallurgische Verbindung des sich auf der Bauteil-Oberfläche 2' ablagernden Schichtmaterials 9 mit dem Material des zu beschichtenden Bauteiles gebildet werden kann, daß sich aber andererseits keine größeren themischen Belastungen des Bauteiles 2 einstellen.

Nach erfolgter Beschichtung desjenigen Abschnittes der Bauteil-Oberfläche 2', auf welche der Pulverstrahl 11 sowie der Laserstrahl 10 hin ausgerichtet sind, wird die Beschichtungslanze 1 neu positioniert, d.h. auf einen anderen Oberflächenabschnitt hin ausgerichtet. Hierbei handelt es sich selbstverständlich um einen kontinuierlichen Prozess, d.h. die Beschichtungslanze 1 wird kontinuierlich bewegt bzw. verfahren, und zwar bevorzugt durch den bereits erwähnten Roboter. Dabei kann die Beschichtungslanze 1 bezüglich des hier rotationssymmetrischen Bauteiles 2 gedreht werden, was durch den Pfeil 12 verdeutlicht wird. Nach einer vollständigen Umdrehung um 360° wird die Beschichtungslanze 1 in Axialrichtung des hier als Brennkraftmaschinen-Zylinder ausgebildeten Bauteiles 2 verfahren, daneben sind jedoch auch andere Bewegungsrichtungen, d.h. abweichende Methoden zur unterschiedlichen Positionierung der Beschichtungslanze 1 möglich.

Je nach gewünschtem Anwendungsfall kann das Silicium im aufzutragenden Aluminium-Silicium-Pulver in einer Konzentration von 2 % bis 99 % (Gewichtsprozent) vorliegen. Optimale Ergebnisse im Bezug auf die Bearbeitbarkeit wurden in Versuchen mit 40 % Silicium-Anteil erzielt, d. h. mit Al-Si-40-Pulver, welches auf einen Zylinder eines Brennkraftmaschinen-Kurbelgehäuses in erfindungsgemäßer Weise aufgetragen wurde, wobei zunächst eine Schichtdicke von 3 mm eingestellt wurde, welche nach Fertigbearbeitung, d.h. nach entsprechendem Materialabtrag zur Erzielung einer galtten, ebenen Oberfläche des Schichtmaterials 9 eine Restdicke von 1,5 mm aufwies. Ähnlich gute Resultate zeigte jedoch auch ein Pulvergemisch mit einem Silicium-Anteil in der Größenordnung von 35% bis 50%. Jedoch kann dies sowie eine Vielzahl weiterer Details auch abweichend hiervon gestaltet sein, ohne den Inhalt der Patentansprüche zu verlassen.

## Patentansprüche

1. Verfahren zum Beschichten eines insbesondere aus einer Aluminium-Legierung bestehenden Bauteils (2) einer Brennkraftmaschine, insbesondere eines Brennkraftmaschinen-Zylinders, mit Silicium durch einen Hochenergiestrahl,
dadurch gekennzeichnet, daß ein Aluminium-Silicium-Pulver mittels einer geeigneten, ähnlich einer beim bekannten Plasmaspritzen Verwendung findenden Pulverfördereinrichtung in Zusammenwirken mit dem als Laserstrahl (10) ausgebildeten Hochenergiestrahl von der festen in die schmelzflüssige Phase umgewandelt und auf die Bauteil-Oberfläche (2') in Form feiner Tröpfchen als Schichtmaterial (9) aufgetragen wird, und wobei eine Möglichkeit zur Kühlung der Bauteil-Oberfläche (2') vorgesehen ist, so daß beim folgenden Erstarrungsprozeß feinstdisperses Silicium freigesetzt wird.

2. Verfahren nach Anspruch 1,
dadurch gekennzeichnet, daß die Bauteil-Oberfläche (2') extrem gekühlt wird, bspw. mittels flüssigem Stickstoff, wodurch sich das Schichtmaterial (9) als amorphes Aluminium-Silicium-Glas ausbildet.

3. Verfahren nach Anspruch 1 oder 2 zum Beschichten der Zylinder eines Brennkraftmaschinen-Kurbelgehäuses,
dadurch gekennzeichnet, daß die Kühlung der Bauteil-Oberfläche (2') über die Kühlwasser-Kanäle des Kurbelgehäuses erfolgt.

4. Verfahren nach einem der vorangegangenen Ansprüche,
dadurch gekennzeichnet, daß im Aluminium-Silicium-Pulver das Silicium in einer Konzentration von 2% - 90%, insbesondere 35% bis 50% vorliegt.

5. Verfahren nach einem der vorangegangenen Ansprüche,
dadurch gekennzeichnet, daß eine bezüglich der Oberfläche (2') des zu beschichtendes Bauteiles (2) unterschiedlich positionierbarte Beschichtungslanze (1) zum Einsatz kommt, über die der als Laserstrahl (10) ausgebildete Hochenergiestrahl fokussiert sowie ggf. umgelenkt auf die Bauteil-Oberfläche (2') projiziert wird, und daß in diesen projizierten als Laserstrahl (10) ausgebildeten Hochenergiestrahl über eine an der Beschichtungslanze (1) befestigte und mit einer Pulverfördereinrichtung für das Aluminium-Silicium-Pulver verbundene Pulver-Austrittsdüse (8) ein auf die Bauteil-Oberfläche (2') gerichteter Pulverstrahl (11) eingeleitet wird.

## Claims

1. A method of coating an especially aluminium-alloy engine component (2) especially an engine cylinder, with silicon by means of a high-energy beam,
characterised in that an aluminium-silicon powder is converted from the solid to the molten phase by a suitable powder supply device, similar to that used in known plasma spraying, in co-operation with a high-energy beam in the form of a laser beam (10) and is deposited as a coating material (9) in the form of fine droplets on the surface (2') of the component, and means are provided for cooling the component surface (2') so that finely dispersed silicon is liberated during the subsequent solidification process.

2. A method according to claim 1,
characterised in that the component surface (2') is cooled to an extreme extent, e.g. by liquid nitrogen, with the result that the coating material (9) is converted to amorphous aluminium-silicon glass.

3. A method according to claim 1 or claim 2 for coating the cylinders of an engine crankcase,
characterised in that the component surface (2') is cooled via the cooling-water ducts of the crankcase.

4. A method according to any of the preceding claims,
characterised in that the silicon in the aluminium-silicon powder is in a concentration of 2% - 90%, especially 35% to 50%.

5. A method according to any of the preceding claims,
characterised in that a coating lance (1) which can be variously positioned relative to the surface (2') of the component (2) for coating is used and focuses the high-energy beam in the form of a laser beam (10) and projects it, deflected if required, on to the surface (2') of the component, and a jet (11) of powder directed towards the component surface (2') is introduced into the projected high-energy laser beam (10) by an outlet nozzle (8) fastened to the coating lance (1) and connected to a means for conveying the aluminium-silicon powder.

## Revendications

1. Procédé de revêtement d'une pièce (2) d'un moteur à combustion interne, notamment en alliage d'aluminium, en particulier d'un cylindre de moteur, avec du silicium, en utilisant un faisceau de forte énergie,
caractérisé en ce qu'
on transforme une poudre d'aluminium-silicium à l'aide d'une installation de transfert de poudre telle que celle utilisée pour la projection par plasma, en coopérant avec un faisceau d'énergie constitué par un faisceau laser (10) pour passer de la phase solide à la phase fondue, et on applique cette poudre à la surface (2') de la pièce sous la forme de fines gouttelettes de matière de revêtement (9), avec possibilité de refroidissement de la surface (2') de la pièce pour libérer du silicium finement dispersé au cours de la solidification consécutive.

2. Procédé selon la revendication 1,
caractérisé en ce qu'
on refroidit de manière extrême la surface (2') de la pièce par exemple avec de l'azote liquide, pour que la matière (9) de la couche se forme comme du verre d'aluminium-silicium amorphe.

3. Procédé selon la revendication 1 ou 2 pour revêtir le cylindre d'un carter de vilebrequin d'un moteur à combustion interne,
caractérisé en ce qu'
on refroidit la surface (2') de la pièce à l'aide des canaux d'eau de refroidissement du carter de vilebrequin.

4. Procédé selon l'une des revendications précédentes, caractérisé en ce que
la teneur en silicium de la poudre d'aluminium-silicium correspond à une concentration de 2 % - 90 % et notamment de 35 % - 50 %.

5. Procédé selon l'une des revendications 1 à 4,
caractérisé en ce qu'
• on utilise une lance de revêtement (1) qui peut se positionner par rapport à la surface (2') de la pièce à revêtir (2), de manière variable, en focalisant un faisceau laser (10) comme faisceau de forte énergie, et le cas échéant en déviant le faisceau pour le projeter sur la surface (2') de la pièce, et
• on introduit la poudre dans le faisceau laser (10) constituant le faisceau à forte énergie, par une buse de sortie de poudre (8) reliée à la lance de revêtement (1) et à l'installation d'alimentation en poudre d'aluminium-silicium, pour diriger un faisceau de poudre (11) sur la surface (2') de la pièce.
